# EUROPÄISCHE PATENTSCHRIFT

(11) **EP 4 677 812 B1**
(45) Veröffentlichungstag und Bekanntmachung des Hinweises auf die Patenterteilung: **24.06.2026**
(21) Anmeldenummer: 24725916.1
(22) Anmeldetag: 21.05.2024
(51) Int. Cl.: H04L 12/40, H04L 12/46, H04L 67/12, H04L 69/08

(54) **BRÜCKEN-FELDBUSMODUL UND VERFAHREN ZUM BETREIBEN EINES BRÜCKEN-FELDBUSMODULS**
BRIDGING FIELD BUS MODULE AND METHOD FOR OPERATING A BRIDGING FIELD BUS MODULE
MODULE PASSERELLE DE BUS DE TERRAIN ET PROCÉDÉ DE FONCTIONNEMENT D'UN MODULE PASSERELLE DE BUS DE TERRAIN

(30) Priorität: 02.06.2023 LU 504404
(43) Veröffentlichungstag der Anmeldung: 14.01.2026
(73) Patentinhaber: Turck Holding GmbH, 58553 Halver (DE)
(72) Erfinder: SCHELTE, Benjamin, 58675 Hemer (DE); MELNIK, Marius, 58135 Hagen (DE); WEUSTENFELD, Christian, 58256 Ennepetal (DE); VOM STEIN, Johannes, 42499 Hückeswagen (DE)
(74) Vertreter: Pearl Cohen EU
(86) Internationale Anmeldenummer: PCT/EP2024/063971
(87) Internationale Veröffentlichungsnummer: WO 2024/245829

(56) Entgegenhaltungen:
- DE-A1- 102020 113 572
- US-B2- 10 860 515
- DE MORAES JOAO ET AL: "Architecture of an industrial analog input designed to meet safety requirements", 2018 IEEE 19TH LATIN-AMERICAN TEST SYMPOSIUM (LATS), IEEE, 12 March 2018 (2018-03-12), pages 1 - 4, XP033335915, DOI: 10.1109/LATW.2018.8349673

## Beschreibung

Die vorliegende Offenbarung betrifft ein Brücken-Feldbusmodul, das zur Verbindung zweier Netzwerke miteinander ausgestaltet ist. Die vorliegende Offenbarung betrifft ein Verfahren zum Betreiben eines solchen Brücken-Feldbusmoduls. Die vorliegende Offenbarung betrifft ein Computerprogramm und/oder ein computer-lesbares Medium, umfassend Befehle, die bei der Ausführung des Programms bzw. der Befehle durch einen Computer diesen veranlassen, das Verfahren zumindest teilweise auszuführen.

Die vorliegende Offenbarung liegt auf dem technischen Gebiet der Industrieautomation.

In Moraes et al. (DE MORAES JOAO ET AL: "Archticture of an industrial analog input designed to meet safety requirements", 2018 IEEE 19TH LATIN-AMERICAN TEST SYMPOSIUM (LATS), IEEE, 12. März 2018 (2018-03-12), Seiten 1-4, XP033335915, DOI: 10.1109/LATW.2018.8349673) ist eine Architektur eines industriellen Analogeingangs beschrieben, der Sicherheitsanforderungen erfüllt.

In der DE 10 2020 113 572 A1 ist ein Protokollumsetzer zum Umsetzen von sicherheitsrelevanten Nachrichten zwischen einem ersten Netzwerk und einem zweiten Netzwerk beschrieben. Dieser umfasst eine einkanalige Schnittstellen-Einrichtung, die einen Nachrichtenaustausch mit dem ersten Netzwerk und mit dem zweiten Netzwerk ermöglicht, wobei das erste Netzwerk wenigstens einen ersten Teilnehmer mit einer ersten Sicherheitskommunikationsschicht aufweist, die ein erstes Sicherheitskommunikationsprotokoll verarbeitet, und wobei das zweite Netzwerk wenigstens einen zweiten Teilnehmer mit einer zweiten Sicherheitskommunikationsschicht aufweist, die ein zweites Sicherheitskommunikationsprotokoll verarbeitet. Der Protokollumsetzer umfasst eine mit der Schnittstellen-Einrichtung verbundene einkanalige Filter-Modul-Einrichtung, um aus von der Schnittstellen-Einrichtung empfangenen Nachrichten Nachrichten mit dem ersten Sicherheitskommunikationsprotokoll und Nachrichten mit dem zweiten Sicherheitskommunikationsprotokoll zu ermitteln, ein mit der Filter-Modul-Einrichtung verbundenes wenigstens zweikanaliges Sicherheits-Modul um von der Filter-Modul-Einrichtung ermittelte Nachrichten mit dem ersten Sicherheitskommunikationsprotokoll in Nachrichten mit dem zweiten Sicherheitskommunikationsprotokoll beziehungsweise um von der Filter-Modul-Einrichtung ermittelte Nachrichten mit dem zweiten Sicherheitskommunikationsprotokoll in Nachrichten mit dem ersten Sicherheitskommunikationsprotokoll umzusetzen.

Vor dem Hintergrund dieses Standes der Technik kann eine Aufgabe der vorliegenden Offenbarung darin gesehen werden, eine Vorrichtung und/oder ein Verfahren anzugeben, die jeweils geeignet sind, den Stand der Technik zu bereichern.

Gelöst wird die Aufgabe durch die Merkmale der unabhängigen Ansprüche. Die nebengeordneten Ansprüche und die Unteransprüche haben jeweils optionale Weiterbildungen der Offenbarung zum Inhalt.

Danach wird die Aufgabe durch ein Brücken-Feldbusmodul gelöst, das zur Verbindung zweier Feldbusnetzwerke miteinander ausgestaltet ist.

Ein erstes Feldbusnetzwerk der zwei Feldbusnetzwerke nutzt für sicherheitsrelevante Nachrichten ein erstes Sicherheitsprotokoll sowie das Black Channel Prinzip. Ein zweites Feldbusnetzwerk der zwei Feldbusnetzwerke nutzt für die sicherheitsrelevanten Nachrichten ein zweites, vom ersten Sicherheitsprotokoll abweichendes Sicherheitsprotokoll sowie das Black Channel Prinzip.

Das Brücken-Feldbusmodul umfasst ein Kopplungselement, das ausgestaltet ist, um eine von dem ersten Feldbusnetzwerk an dem Feldbus-Brückenmodul empfangene sicherheitsrelevante Nachricht zu erkennen.

Das Brücken-Feldbusmodul ist ausgestaltet, um die sicherheitsrelevante Nachricht von dem ersten Netzwerk zu empfangen, die dem ersten Sicherheitsprotokoll entspricht.

Das Brücken-Feldbusmodul ist ausgestaltet, um die von dem ersten Feldbusnetzwerk empfangene, erkannte sicherheitsrelevante Nachricht in eine erste und eine zweite sicherheitsrelevante Nachricht umzuwandeln, die jeweils dem zweiten Sicherheitsprotokoll entsprechen.

Das Brücken-Feldbusmodul ist ausgestaltet, um die erste und die zweite sicherheitsrelevante Nachricht miteinander zu vergleichen.

Das Brücken-Feldbusmodul ist ausgestaltet, um die erste und/oder die zweite sicherheitsrelevante Nachricht in Abhängigkeit eines Ergebnisses des Vergleichens, optional ausschließlich bei Identität der ersten und der zweiten sicherheitsrelevanten Nachricht, an das zweite Feldbusnetzwerk auszugeben

Das Brücken-Feldbusmodul kann ausgestaltet sein, um die erste und die zweite sicherheitsrelevante Nachricht zu einer weiteren Nachricht zusammenzufassen und die weitere Nachricht an das zweite Feldbusnetzwerk auszugeben.

Insofern in der nachfolgenden Beschreibung der Begriff "Netzwerk" verwendet wird, so kann darunter ein "Feldbusnetzwerk" verstanden werden.

Unter einem Feldbus kann ein Bussystem verstanden werden, das Feldgeräte, wie z. B. Messfühler bzw. Sensoren und Stellglieder bzw. Aktoren, zur Kommunikation mit einem Automatisierungsgerät bzw. einem Feldbusmodul verbindet.

Unter einem Felsbusnetzwerk kann ein Zusammenschluss von Feldbusmodulen über einen als Feldbus ausgeführten Bus verstanden werden, in dem dasselbe Sicherheitsprotokoll genutzt wird.

Teilnehmer der beiden Netzwerke können also durch deren jeweilige Eignung zur Nutzung des ersten oder des zweiten Sicherheitsprotokolls unterschieden werden. Da das Brücken-Feldbusmodul ausgestaltet ist, um Nachrichten in dem ersten und dem zweiten Sicherheitsprotokoll zu verarbeiten, kann es Teil des ersten und des zweiten Netzwerks sein, und somit eine kommunikative Verbindung bzw. Brücke zwischen den beiden Netzwerken herstellen.

Unter einem Sicherheitsprotokoll kann ein Kommunikationsprotokoll zur Übertragung (optional vorbestimmter) sicherheitsrelevanter Daten bzw. Nachrichten in Automatisierungsanwendungen verstanden werden. Das Sicherheitsprotokoll ist demnach eine Spezialform eines für Feldbussysteme geeigneten Kommunikationsprotokolls bzw. Busprotokolls.

Das Sicherheitsprotokoll kann vorbestimmte Anforderungen an eine funktionale Sicherheit, optional eine vorbestimmte Sicherheitsanforderungsstufe, erfüllen.

Die Sicherheitsanforderungsstufe ist ein Begriff aus dem Gebiet der funktionalen Sicherheit und wird in der internationalen Normung gemäß IEC 61508/IEC61511 auch als Sicherheitsstufe oder Sicherheits-Integritätslevel (entlehnt aus dem Englischen ,safety integrity level', kurz SIL) bezeichnet. Die Sicherheitsanforderungsstufe dient der Beurteilung elektrischer/elektronischer/programmierbarer elektronischer (E/E/PE)-Systeme in Bezug auf die Zuverlässigkeit von Sicherheitsfunktionen. Aus dem angestrebten Level ergeben sich die sicherheitsgerichteten Konstruktionsprinzipien, die eingehalten werden müssen, damit das Risiko einer Fehlfunktion minimiert werden kann.

Denkbar ist, dass neben dem Sicherheitsprotokoll ein Busprotokoll implementiert ist, welches die Anforderungen an die funktionale Sicherheit nicht erfüllt. Über bzw. mittels dieses Busprotokolls können (optional vorbestimmte) nicht sicherheitsrelevante Daten, z. B. Diagnosedaten, kommuniziert werden.

Vorliegend wird das Black Channel Prinzip genutzt werden. Dem Black Channel Prinzip liegt zumeist ein Kommunikationskanal bzw. ein Busprotokoll zugrunde, der bzw. das die vorbestimmten Anforderungen an die funktionale Sicherheit nicht erfüllt. Für den Entwurf sicherheitsgerichteter Systeme kann jedoch die Einhaltung von einschlägigen Normen, wie der IEC 61508, nachzuweisen sein. Wenn in solchen Systemen Kommunikationsverfahren - wie zum Beispiel Ethernet - verwendet werden, für die dieser Nachweis nicht möglich ist, kann ersatzweise das "Black Channel"-Prinzip angewendet werden. Hierzu wird üblicherweise zwischen der Sicherheitsanwendung und dem "nichtsicheren" Standardkommunikationskanal das Sicherheitsprotokoll integriert, welches dem Sicherheitsniveau des sicherheitsgerichteten Systems entspricht und Übertragungsfehler der darunterliegenden Kommunikationsschichten erkennt und beherrscht. Das heißt, der "nichtsichere" Übertragungskanal wird durch ein übergeordnetes "sicheres" Protokoll laufend hinsichtlich seiner Integrität überwacht. Mit anderen Worten, beim "Black Channel" Prinzip kann ein unsicherer Kommunikationskanal durch ein Sicherheitsprotokoll überwacht werden.

Beispiele für Übertragungsfehler auf Ebene der Protokollpakete im "nichtsicheren" Kanal sind dabei eine Wiederholung, ein Verlust, eine Einfügung, eine falsche Abfolge, eine Verfälschung, eine Verzögerung und/oder eine Vermischung von sicheren und nichtsicheren Telegrammen.

Stellt das Sicherheitsprotokoll einen derartigen Fehler fest, kann eine Fehlerreaktion eingeleitet werden. Denkbar ist, dass der (Übertragungs-) Fehler noch beherrscht und damit toleriert werden kann, andernfalls ist denkbar, dass die Anlage in einen sicheren Zustand, z. B. in einen Stillstand, überführt wird.

Sicherheitsgerichtete Feldbusprotokolle bzw. Sicherheitsprotokoll sind in den Normen IEC 61158 (Basiskommunikation), IEC 61784-2 (Echtzeit-Kommunikation) und IEC 61784-3-18 (Sicherheitsprofil) spezifiziert.

Die oben beschriebene Vorrichtung bietet dabei eine Reihe von Vorteilen, die im Folgenden ausgeführt werden.

Es existieren verschiedene Sicherheitsprotokolle, die nicht miteinander kompatibel sind (oben als erstes und als zweites Sicherheitsprotokoll bezeichnet).

Bei bisherigen Lösungen können einzelne sicherheitsgerichtete digitale Signale zwischen zwei inkompatiblen Sicherheitsprotokollen ausgetauscht werden, indem die Daten über sichere Ausgänge eines Moduls ausgegeben und über sichere Eingänge eines anderen Moduls eingelesen werden.

Eine solche Lösung ist jedoch aufwändig, da zwei Module benötigt werden, die jeweils eines der beiden inkompatiblen Sicherheitsprotokolle bedienen, und für jedes digitale Bit ein sicherer Ausgang und ein sicherer Eingang benötigt wird.

Durch ein (optional einziges) offenbarungsgemäßes Feldbusmodul, das als Brücke zwischen zwei miteinander inkompatiblen Sicherheitsprotokollen dient, d. h. einem Brücken-Feldbusmodul, können Daten zwischen diesen beiden Sicherheitsprotokollen, und optional zusätzlich Ein- und/oder Ausgangsdaten des Brücken-Feldbusmoduls, sicher ausgetauscht werden. Dies wird unter anderem durch die redundante Umwandlung der sicherheitsrelevanten Daten (oben als Nachricht, die in dem ersten Sicherheitsprotokoll vorliegt) ermöglicht. Die redundanten Umwandlung erlaubt es etwaige bei der Umwandlung auftretende Fehler mit einer Sicherheit auszuschließen, die den oben beschriebene Anforderungen an die funktionale Sicherheit genügt.

Nachfolgend werden mögliche Weiterbildungen der oben beschriebenen Vorrichtung im Detail erläutert.

Das Umwandeln der von dem ersten Netzwerk empfangenen sicherheitsrelevanten Nachricht in die erste sicherheitsrelevante Nachricht kann ein Bilden einer ersten Prüfsumme für die erste sicherheitsrelevante Nachricht umfassen.

Das Umwandeln der von dem ersten Netzwerk empfangenen sicherheitsrelevanten Nachricht in die zweite sicherheitsrelevante Nachricht kann ein Bilden einer zweiten Prüfsumme für die zweite sicherheitsrelevante Nachricht umfassen.

Die erste sicherheitsrelevante Nachricht kann zusammen mit der ersten Prüfsumme in Abhängigkeit des Ergebnisses des Vergleichens an das zweite Netzwerk ausgegeben werden.

Zusätzlich kann die zweite sicherheitsrelevante Nachricht zusammen mit der zweiten Prüfsumme Abhängigkeit des Ergebnisses des Vergleichens an das zweite Netzwerk ausgegeben werden.

Denkbar ist, dass die erste Nachricht zusammen mit der ersten Prüfsumme einen ersten Subframe und die zweite Nachricht zusammen mit der zweiten Prüfsumme einen zweiten Subframe bilden, sodass der ertse und der zweite Subframe in einer Naxhricht an das zweite Netzwerk ausgegebn werden können.

Unter einer Prüfsumme (englisch ,checksum') kann ein Wert verstanden werden, mit dem die Integrität von Daten, hier der ersten bzw. zweiten Nachricht, überprüft werden kann. Die Prüfsumme kann aus der ersten bzw. der zweiten Nachricht berechnet werden und in der Lage sein, bestimmte Fehler in der ersten bzw. der zweiten Nachricht zu erkennen. Je nachdem wie komplex die Berechnungsvorschrift für die Prüfsumme ist, können mehrere Fehler erkannt und optional auch korrigiert werden.

Denkbar ist, dass die Zyklische Redundanzprüfung Anwendung findet. Die zyklische Redundanzprüfung (englisch ,cyclic redundancy check', kurz CRC) ist ein Verfahren zur Bestimmung eines Prüfwerts bzw. einer Prüfsumme für Daten, um Fehler bei der Übertragung und/oder Speicherung erkennen zu können. Im Idealfall kann das Verfahren sogar die empfangenen Daten selbständig korrigieren, um eine erneute Übertragung zu vermeiden. Die Zyklische Redundanzprüfung an sich ist dem Fachmann bekannt und wird daher nicht weiter erläutert.

Durch das Übermitteln der ersten und der zweiten Nachricht zusammen mit deren jeweiliger Prüfsumme in einer Nachricht kann zum einen eine Überprüfung auf eine fehlerfreie Übertragung der beiden Nachrichten an ein Feldbusmodul bzw. einen Empfänger in dem zweiten Netzwerk ermöglicht werden. Zum anderen kann aber auch das Prüfen der Korrektheit der Umwandlung erfolgen, indem die beiden Prüfsummen miteinander verglichen werden. Dieser Vergleich der beiden Prüfsummen kann sowohl von dem Feldbusmodul des Netzwerks, d. h. vom Empfänger der weiteren Nachricht, als auch, zusätzlich oder alternativ, von dem Brücken-Feldbusmodul durchgeführt werden.

Das Brücken-Feldbusmodul kann eine erste Datenverarbeitungsvorrichtung umfassen, die zur Umwandlung der von dem ersten Netzwerk empfangenen sicherheitsrelevanten Nachricht in die erste sicherheitsrelevante Nachricht und optional zum Bilden der ersten Prüfsumme ausgestaltet ist.

Bei der ersten Datenverarbeitungsvorrichtung kann es sich um einen Mikrocontroller handeln. Unter einem Mikrocontroller (MCU) kann ein Halbleiterchip verstanden werden, der einen Prozessor und zugleich auch Peripheriefunktionen umfasst. Denkbar ist, dass sich auch der Arbeits- und Programmspeicher teilweise oder komplett auf demselben Chip befindet. Der Mikrocontroller kann als ein Ein-Chip-Computersystem ausgeführt sein. Für manche Mikrocontroller wird daher auch der Begriff System-on-a-Chip (SoC) verwendet.

Die erste Datenverarbeitungsvorrichtung kann einen ersten sicheren Speicher umfassen, der ausgestaltet ist, um die erste Nachricht und optional die erste Prüfsumme zwischenzuspeichern.

Unter einem sicheren Speicher kann ein Speicher bzw. eine Speichervorrichtung verstanden werden, welche dieselben Anforderungen an die funktionale Sicherheit erfüllt wie das erste und/oder das zweite Sicherheitsprotokoll. Durch die Verwendung eines sicheren Speichers kann das System als ganzes die Anforderungen an die funktionale Sicherheit erfüllen.

Das Brücken-Feldbusmodul kann eine zweite Datenverarbeitungsvorrichtung umfassen, die zur Umwandlung der von dem ersten Netzwerk empfangenen sicherheitsrelevanten Nachricht in die zweite sicherheitsrelevante Nachricht und optional zum Bilden der zweiten Prüfsumme ausgestaltet ist.

Die zweite Datenverarbeitungsvorrichtung kann einen zweiten sicheren Speicher umfassen, der ausgestaltet ist, um die zweite Nachricht und optional die zweite Prüfsumme zwischenzuspeichern.

Das oben mit Bezug zur ersten Datenverarbeitungsvorrichtung und zum ersten Speicher Beschriebene gilt analog auch für die zweite Datenverarbeitungsvorrichtung und den zweiten Speicher.

Durch Vorsehen der zweiten Datenverarbeitungsvorrichtung kann eine Redundanz sichergestellt werden. Dies hat den Vorteil, dass ein Fehler, der in einer der beiden Datenverarbeitungsvorrichtungen auftritt, bei einem Kreuzvergleich mit einem Ergebnis der anderen Datenverarbeitungsvorrichtung erkannt werden kann, welche dieselbe (Sicherheits-) Funktion ausführt. Die beiden Datenverarbeitungsvorrichtungen können sich demnach gegenseitig kontrollieren.

Wie oben beschrieben nutzen beide Feldbusnetzwerke das Black Channel Prinzip.

Das Brücken-Feldbusmodul weist ferner das Kopplungselement auf, das ausgestaltet ist, um die sicherheitsrelevante Nachricht, die an dem Feldbus-Brückenmodul empfangen wird, zu erkennen.

Das Kopplungselement kann ausgestaltet sein, um die erkannte sicherheitsrelevante Nachricht an die erste Datenverarbeitungsvorrichtung auszugeben.

Das Kopplungselement kann ausgestaltet sein, um die erkannte sicherheitsrelevante Nachricht an die zweite Datenverarbeitungsvorrichtung auszugeben.

Das Kopplungselement kann als Switch bzw. Gateway ausgeführt sein. Das Kopplungselement kann Teil des Black Channels sein, welcher an der ersten bzw. der zweiten Datenverarbeitungsvorrichtung endet. Das Kopplungselement kann daher sowohl eine Kommunikation von sicherheitsrelevanten als auch nicht sicherheitsrelevanten Daten zwischen den beiden Feldbusnetzwerken ermöglichen.

Das oben Beschriebene lässt sich mit anderen Worten und auf eine mögliche konkretere Ausgestaltung der Offenbarung wie nachfolgend beschrieben zusammenfassen, wobei die nachfolgende Beschreibung für die Offenbarung als nicht einschränkend auszulegen ist.

Es kann ein Brücken-Feldbusmodul mit zwei Ethernet Ports bereitgestellt werden, wobei ein erster Ethernet Port mit einem ersten Netzwerk verbunden ist, auf dem ein erstes sicheres Busprotokoll implementiert ist, und ein zweiter Ethernet Port mit einem zweiten Netzwerk verbunden ist, auf dem ein zweites, mit dem ersten inkompatibles sicheres Busprotokoll implementiert ist.

Das Brücken-Feldbusmodul kann sichere Eingänge und sichere Ausgänge aufweisen.

Das Brücken-Feldbusmodul kann zwei Datenspeicher für sicherheitsrelevante Daten, in denen sicherheitsrelevante Daten redundant abgelegt werden, umfassen.

Aus den sicherheitsrelevanten Daten kann jeweils eine Checksumme (CRC) generiert werden. Die Checksummen des ersten Datenspeichers und des zweiten Datenspeichers können miteinander verglichen werden, um jeweils die Validität der Daten zu prüfen, und die Übereinstimmung der Daten der beiden Speicherbereiche zu überprüfen.

Eines der sicheren Busprotokolle kann ein marktübliches Sicherheitsprotokoll (z. B. Profisafe, CIPP Safety) sein, für das kompatible Steuerungen, Aktoren und Sensoren und weitere Netzwerkteilnehmer verschiedener Hersteller auf dem Markt zur Verfügung stehen. Das andere sichere Busprotokoll kann folgende Eigenschaften aufweisen:
- die sicherheitsrelevante Information kann redundant vorliegen (beispielsweise in zwei Teilen mit gleichem Informationsgehalt)
- jeder Teil kann mit einer Checksumme abgesichert sein, die die Validität dieses Teils prüft, und/oder
- kann es sich um ein nicht marktübliches sicheres Busprotokoll handeln, für das nur "eigene" sichere Netzwerkteilnehmer vorgesehen sind (wobei die Struktur und die Sicherheitsmechanismen des Protokolls bekannt sind, z. B. Open Safety)

Zumindest einer der beiden Speicher kann drei Speicherbereiche aufweisen, wobei ein erster der Speicherbereiche für ein erstes der beiden Sicherheitsprotokolle vorgesehen ist, ein zweiter der Speicherbereiche für ein zweites der beiden Sicherheitsprotokolle und ein dritter der Speicherbereiche für sichere Eingangs- und/oder Ausgangsdaten, die an dem Brückenfeldbusmodul von direkt daran angeschlossenen Sensoren und/oder Aktoren empfangen wird.

Ferner betrifft die Offenbarung ein Verfahren zum Betreiben eines Brücken-Feldbusmoduls, das zur Verbindung zweier Feldbusnetzwerke miteinander ausgestaltet ist.

Ein erstes Feldbusnetzwerk der zwei Feldbusnetzwerke nutzt für sicherheitsrelevante Nachrichten ein erstes Sicherheitsprotokoll sowie das Black Channel Prinzip. Ein zweites Feldbusnetzwerk der zwei Feldbusnetzwerke nutzt für die sicherheitsrelevanten Nachrichten ein zweites, vom ersten Sicherheitsprotokoll abweichendes Sicherheitsprotokoll sowie das Black Channel Prinzip.

Das Verfahren umfasst ein Empfangen einer sicherheitsrelevanten Nachricht von dem ersten Feldbusnetzwerk, die dem ersten Sicherheitsprotokoll entspricht, an dem Brücken-Feldbusmodul.

Das Verfahren umfasst ein Erkennen der an dem Feldbus-Brückenmodul von dem ersten Feldbusnetzwerk empfangenen sicherheitsrelevante Nachricht mittels eines Kopplungselements.

Das Verfahren umfasst ein Umwandeln der erkannten, von dem ersten Feldbusnetzwerk empfangenen sicherheitsrelevanten Nachricht in eine erste und eine zweite sicherheitsrelevante Nachricht, die jeweils dem zweiten Sicherheitsprotokoll entsprechen.

Das Verfahren umfasst ein Vergleichen der ersten und der zweiten sicherheitsrelevanten Nachricht miteinander.

Das Verfahren umfasst ein Ausgeben der ersten und/oder der zweiten sicherheitsrelevanten Nachricht in Abhängigkeit eines Ergebnisses des Vergleichens an das zweite Netzwerk.

Das Verfahren kann ein Zusammenfassen der ersten und der zweiten sicherheitsrelevanten Nachricht zu einer weiteren Nachricht und ein Ausgeben der weiteren Nachricht an das zweite Netzwerk umfassen.

Das Verfahren kann auch als Steuerverfahren für ein Brücken-Feldbusmodul bezeichnet werden.

Bei dem Verfahren kann es sich um ein computer-implementiertes Verfahren handeln, d. h. einer, mehrere oder alle Schritte des Verfahrens können zumindest teilweise von einem Computer bzw. einer Vorrichtung zur Datenverarbeitung, optional dem oben beschriebenen Brücken-Feldbusmodul, ausgeführt werden.

Das oben mit Bezug zum Brücken-Feldbusmodul Beschriebene gilt analog auch für das Verfahren und umgekehrt.

Ferner wird ein Computerprogramm, umfassend Befehle, die bei der Ausführung des Programms durch einen Computer diesen veranlassen, das oben beschriebene Verfahren zumindest teilweise aus- bzw. durchzuführen, bereitgestellt.

Ein Programmcode des Computerprogramms kann in einem beliebigen Code vorliegen, insbesondere in einem Code, der für Steuerungen von Feldbusmodulen geeignet ist.

Das oben mit Bezug zum Brücken-Feldbusmodul und zum Verfahren Beschriebene gilt analog auch für das Computerprogramm und umgekehrt.

Ferner wird ein computerlesbares Medium, insbesondere ein computerlesbares Speichermedium, bereitgestellt. Das computerlesbare Medium umfasst Befehle, die bei der Ausführung der Befehle durch einen Computer diesen dazu veranlassen, das oben beschriebene Verfahren zumindest teilweise aus- bzw. durchzuführen.

Das heißt, es kann ein computerlesbares Medium bereitgestellt werden, das ein oben definiertes Computerprogramm umfasst. Bei dem computerlesbaren Medium kann es sich um ein beliebiges digitales Datenspeichergerät handeln, wie zum Beispiel einen USB-Stick, eine Festplatte, eine CD-ROM, eine SD-Karte oder eine SSD-Karte (bzw. SSD-Laufwerk/SSD-Festplatte).

Das Computerprogramm muss nicht zwingend auf einem solchen computerlesbaren Speichermedium gespeichert sein, um dem Brücken-Feldbusmodul zur Verfügung gestellt zu werden, sondern kann auch über das Internet oder anderweitig extern bezogen werden.

Das oben mit Bezug zum Brücken-Feldbusmodul, zum Verfahren und zum Computerprogramm Beschriebene gilt analog auch für das computer-lesbare Medium und umgekehrt.

Nachfolgend wird eine optionale Ausführungsform der Offenbarung mit Bezug zu Figuren 1 bis 5 beschrieben.
- Fig. 1: zeigt schematisch ein Netzwerk, aufweisend zwei Feldbusnetzwerke, die über ein offenbarungsgemäßes Brücken-Feldbusmodul miteinander verbunden sind,
- Fig. 2: zeigt schematisch das offenbarungsgemäße Brücken-Feldbusmodul aus Figur 1 im Detail und in Alleinstellung,
- Fig. 3: zeigt schematisch ein Ablaufdiagramm eines offenbarungsgemäßen Verfahrens zum Betreiben des Brücken-Feldbusmodul aus Figuren 1 und 2 bei einer Umwandlung einer sicherheitsrelevanten Nachricht von einem ersten in zweites Sicherheitsprotokoll,
- Fig. 4: zeigt schematisch ein einem zweiten Sicherprotokoll entsprechendes Datenformat,
- Fig. 5: zeigt schematisch ein Ablaufdiagramm des offenbarungsgemäßen Verfahrens zum Betreiben des Brücken-Feldbusmodul aus Figuren 1 und 2 bei einer Umwandlung einer sicherheitsrelevanten Nachricht von dem zweiten in das erste Sicherheitsprotokoll, und
- Fig. 6: zeigt schematisch ein Ablaufdiagramm eines weiteren offenbarungsgemäßen Verfahrens zum Betreiben des Brücken-Feldbusmoduls aus Figuren 1 und 2.

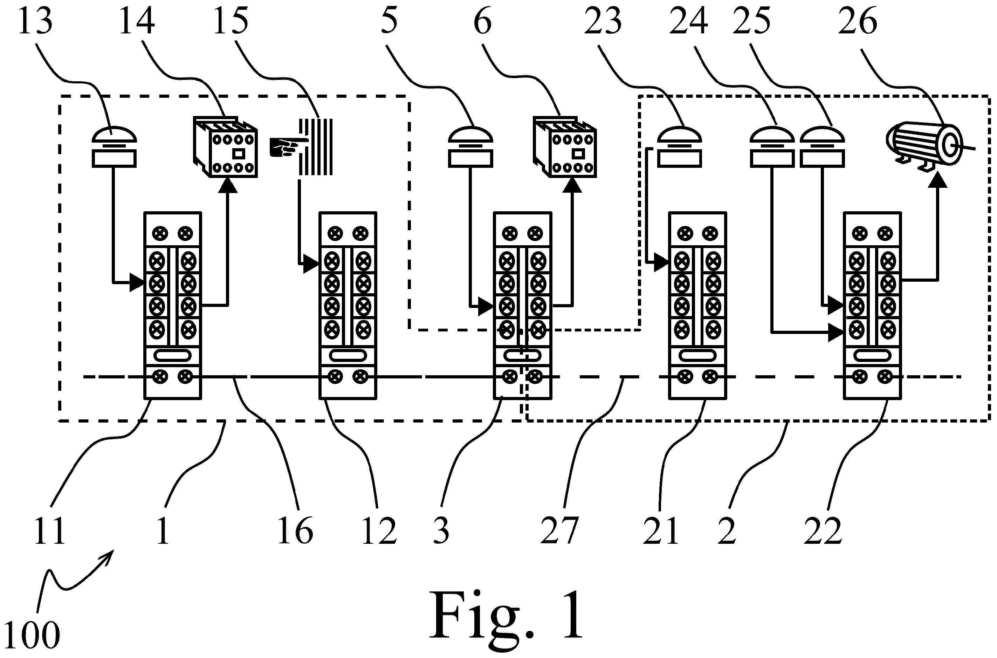

Das in Figur 1 dargestellte Netzwerk 100 weist zwei Feldbusnetzwerke 1, 2 auf.

Nachfolgend wird das erste der beiden Feldbusnetzwerke 1 im Detail beschrieben.

Das erste der beiden Feldbusnetzwerke 1 umfasst zwei Feldbusmodule 11, 12 sowie einen Nothalt-Schalter 13, ein Relay 14 und eine Lichtschranke 15. Die beiden Feldbusmodule 11, 12 sind über einen ersten Feldbus 16 miteinander verbunden. Der Nothalt-Schalter 13 ist mit einem sicheren Eingang der ersten Feldbusmodul 11 verbunden. Das Relay 14 ist mit einem sicheren Ausgang der ersten Feldbusmodul 11 verbunden. Die Lichtschranke 15 ist mit einem sicheren Eingang des zweiten Feldbusmoduls 12 verbunden.

Das erste Feldbusnetzwerk 1 nutzt zur Kommunikation über den Feldbus 16 ein Busprotokoll mit einem ersten Sicherheitsprotokoll. Dabei wird das Black Channel Prinzip genutzt. Das heißt, das genutzte Sicherheitsprotokoll, welches ausgestaltet ist, um eine korrekte Übertragung sicherheitsrelevanter Daten von einem Sender zu einem Empfänger sicherzustellen, ist von der Bitübertragungsschicht (Physical Layer) bzw. dem Busprotokoll unabhängig. Denkbar ist beispielsweise, dass als Bitübertragungsschicht (Physical Layer) bzw. Busprotokoll Industrial Ethernet verwendet wird, auf welchem als Sicherheitsprotokoll Profi Safe aufsetzt. Beide Feldbusmodule 11, 12 des ersten Feldbusnetzwerks 1 sind ausgestaltet, um mittels Profi Safe sicherheitsrelevante Daten bzw. Informationen über den Feldbus 16 zu kommunizieren, d. h. sowohl zu empfangen als auch auszugeben.

Denkbar ist, dass an dem ersten Feldbusmodul 11 eine Nachricht (in Form eines einfachen digitalen Signals) von dem betätigten Nothalt-Schalter 13 empfangen wird und daraufhin von dem ersten Feldbusmodul 11 eine als Steuersignal wirkende Nachricht (ebenfalls als einfaches digitales Signal) an das Relay 14 ausgegeben wird, sodass das Relay 14 in einen gewünschten Zustand schaltet. Denkbar ist auch, dass an dem ersten Feldbusmodul 11 eine Nachricht in dem ersten Sicherheitsprotokoll von der ausgelösten Lichtschranke 15 über das zweite Feldbusmodul 15 empfangen wird und daraufhin von dem ersten Feldbusmodul 11 die als Steuersignal wirkende Nachricht (als einfaches digitales Signal) an das Relay 14 ausgegeben wird, sodass das Relay 14 in den gewünschten Zustand schaltet.

Nachfolgend wird das zweite der beiden Feldbusnetzwerke 2 im Detail beschrieben.

Das zweite der beiden Feldbusnetzwerke 2 umfasst ebenfalls zwei Feldbusmodule 21, 22, sowie drei Nothalt-Schalter 23, 24, 25 und einen Aktor 26. Die beiden Feldbusmodule 21, 22 sind über einen zweiten Feldbus 27 miteinander verbunden. Ein erster der drei Nothalt-Schalter, nachfolgend als zweiter Nothalt-Schalter 23 bezeichnet, ist mit einem sicheren Eingang des ersten Feldbusmoduls 21 verbunden. Ein zweiter und ein dritter der drei Nothalt-Schalter, nachfolgend als dritter und vierter Nothalt-Schalter 23, 24 bezeichnet, sind jeweils mit einem sicheren Eingang des zweiten Feldbusmoduls 22 verbunden. Der Aktor 26, z. B. ein Motor, ist mit einem sicheren Ausgang des zweiten Feldbusmoduls 22 verbunden.

Das zweite Feldbusnetzwerk 2 nutzt zur Kommunikation über den Feldbus 27 ein Busprotokoll mit einem zweiten Sicherheitsprotokoll. Dabei wird ebenfalls das Black Channel Prinzip genutzt. Das heißt, das genutzte zweite Sicherheitsprotokoll, welches ausgestaltet ist, um eine korrekte Übertragung sicherheitsrelevanter Daten von einem Sender zu einem Empfänger sicherzustellen, ist von der Bitübertragungsschicht (Physical Layer) bzw. dem Busprotokoll unabhängig. Denkbar ist beispielsweise, dass als Bitübertragungsschicht (Physical Layer) bzw. Busprotokoll wiederum Industrial Ethernet verwendet wird, auf welchem als Sicherheitsprotokoll Open Safety aufsetzt. Beide Feldbusmodule 21, 22 des zweiten Feldbusnetzwerks 2 sind ausgestaltet, um mittels Open Safety sicherheitsrelevante Daten bzw. Informationen über den Feldbus 27 zu kommunizieren, d. h. sowohl zu empfangen als auch auszugeben.

Denkbar ist, dass an dem zweiten Feldbusmodul 22 eine Nachricht in dem zweiten Sicherheitsprotokoll von dem betätigten zweiten Nothalt-Schalter 23 über das erste Feldbusmodul 22 empfangen wird und daraufhin von dem zweiten Feldbusmodul 22 eine als Steuersignal wirkende Nachricht an den Aktor 26 ausgegeben wird, sodass der Aktor 26 in einen gewünschten Zustand schaltet (z. B. ausgeschaltet wird). Denkbar ist auch, dass an dem zweiten Feldbusmodul 22 eine Nachricht von dem betätigten dritten und/oder vierten Nothalt-Schalter 24, 25 empfangen wird und daraufhin von dem zweiten Feldbusmodul 22 die als Steuersignal wirkende Nachricht an den Aktor 26 ausgegeben wird, sodass der Aktor 26 in den gewünschten Zustand schaltet.

In allen oben beschriebenen Fällen, findet jedoch nur eine Kommunikation innerhalb des ersten bzw. innerhalb des zweiten Feldbusnetzwerks 1, 2 statt.

Denkbar ist jedoch auch, dass folgender Fall vom Netzwerk 100 abgebildet werden muss.

Als sicherer Zustand ist definiert, dass sowohl das Relay 14 des ersten Feldbusnetzwerks 1 als auch der Aktor 26 des zweiten Feldbusnetzwerks 2 spannungsfrei sind bzw. in einen gewünschten Zustand versetzt werden. Dieser soll eingeleitet werden, wenn einer der Notaus-Schalter 13, 23, 24, 25 und/oder die Lichtschranke 15 betätigt bzw. ausgelöst werden.

Eine Logik, die in einem Programm in einem einzigen der Feldbusmodule 11, 12, 21, 22 der beiden Netzwerke 1, 2 abläuft, führt dazu eine Sicherheitsfunktion aus. Der Logik müssen daher alle sicherheitsrelevanten Daten der beiden Feldbusnetzwerke 1, 2 zur Verfügung gestellt werden.

Wenn die Logik z. B. nur in dem ersten Feldbusmodul 11 des ersten Feldbusnetzwerks 1 ausgeführt wird, müssen die sicherheitsrelevanten Daten der drei Notaus-Schalter 23, 24, 25 des zweiten Feldbusnetzwerks 2 auch im ersten Feldbusnetzwerk 1 zur Verfügung stehen, sodass das erste Feldbusmodul 11 des ersten Feldbusnetzwerks 1 darauf zugreifen kann bzw. diese empfängt. Gleiches gilt für sicherheitsrelevante Daten für den Aktor 26 des zweiten Feldbusnetzwerks 2, welche von der Logik erzeugt und von dem ersten Feldbusmodul 11 des ersten Feldbusnetzwerks 1 ausgegeben werden. Diese sicherheitsrelevanten Daten müssen in dem zweiten Feldbusnetzwerk 2 für das zweite Feldbusmodul 22 dieses Feldbusnetzwerks 2 verfügbar sein, damit von dem zweiten Feldbusmodul 22 des zweiten Feldbusnetzwerks 2 ein entsprechendes Steuersignal, wiederum als sicherheitsrelevante Daten, an den Aktor 26 ausgegeben werden kann.

Dies ist jedoch herausfordernd, wenn wie vorliegend das erste und das zweite Sicherheitsprotokoll, in bzw. gemäß dem die sicherheitsrelevanten Daten kommuniziert werden, nicht miteinander kompatibel sind, d. h. die sicherheitsrelevanten Daten des ersten Feldbusnetzwerks 1 nicht unmittelbar in dem zweiten Feldbusnetzwerk 2 und umgekehrt gelesen werden können.

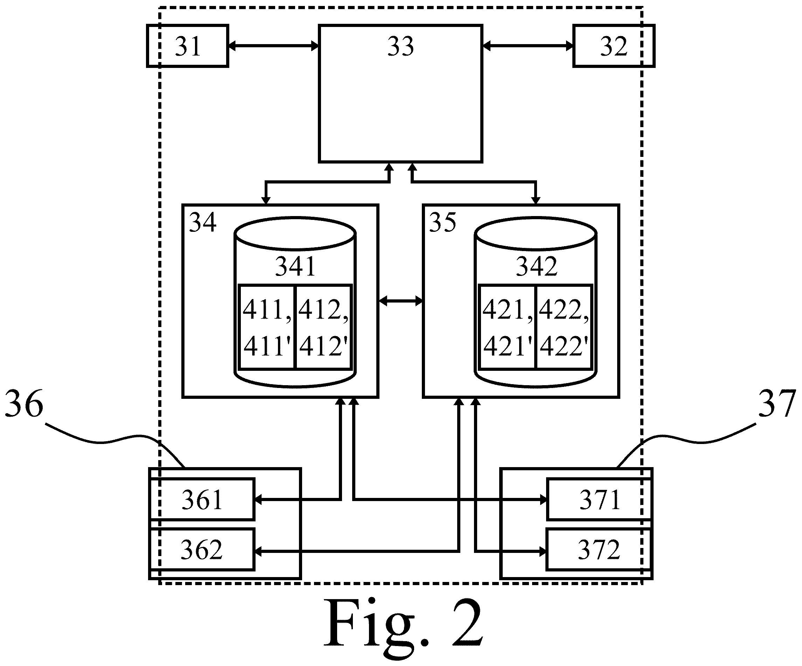

Aus diesem Grund ist ein offenbarungsgemäßes Brücken-Feldbusmodul 3 Teil des Netzwerkes 100, welches die beiden Feldbusnetzwerke 1, 2 zueinander bzw. miteinander verbindet. Das Brücken-Feldbusmodul 3 ist ausgestaltet, um sicherheitsrelevante Daten in beiden Sicherheitsprotokollen zu empfangen, diese sicherheitsrelevanten Daten zwischenzuspeichern, in das jeweils andere Sicherheitsprotokoll zu übersetzen und an das jeweils andere Feldbusnetzwerk 1, 2 auszugeben. Das Brücken-Feldbusmodul 3 ist dazu zu beiden Feldbussen 16, 27 verbunden. Nachfolgend wird das Brücken-Feldbusmodul 3 weiter im Detail auch mit Bezug zu Figur 2 beschrieben.

Das Brücken-Feldbusmodul 3 umfasst einen ersten Port 31 zur Verbindung mit dem Feldbus 16 des ersten der zwei Feldbusnetzwerke 1, auf dem das Busprotokoll mit dem ersten Sicherheitsprotokoll implementiert ist.

Das Brücken-Feldbusmodul 3 umfasst einen zweiten Port 32 zur Verbindung mit dem Feldbus 27 des zweiten der Feldbusnetzwerke 2, auf dem das Busprotokoll mit dem zweiten, zu dem ersten Sicherheitsprotokoll inkompatiblen Sicherheitsprotokoll implementiert ist.

Das Brücken-Feldbusmodul 3 umfasst ein jeweils zum ersten und zweiten Port 31, 32 verbundenes Kopplungselement 33, welches einen unsicheren Speicher umfasst und welches als Switch agiert.

Das Brücken-Feldbusmodul 3 umfasst eine erste zum Kopplungselement 33 verbundene Datenverarbeitungsvorrichtung 34 mit einem ersten sicheren Speicher 341.

Das Brücken-Feldbusmodul 3 umfasst eine zweite zum Kopplungselement 33 verbundene Datenverarbeitungsvorrichtung 35 mit einem zweiten sicheren Speicher 351.

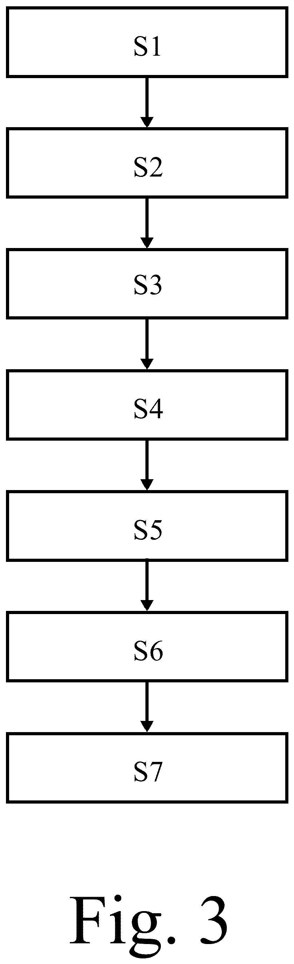

Nachfolgend wird der Betrieb des Brücken-Feldbusmoduls 3 im Detail auch mit Bezug zu Figur 3 beschrieben, welche ein Ablaufdiagramm des Verfahrens zum Betreiben des Brücken-Feldbusmoduls 3 zeigt.

In einem ersten Schritt S1 des Verfahrens wird von dem Kopplungselement 33 eine in dem ersten Sicherheitsprotokoll über den ersten Port 31 von dem ersten Feldbusnetzwerk 1 empfangene Nachricht erkannt.

In einem zweiten Schritt S2 des Verfahrens wird die in dem ersten Schritt S1 erkannte Nachricht von dem Kopplungselement 33 sowohl an die erste als auch an die zweite Datenverarbeitungsvorrichtung 34, 35 ausgegeben.

Das Kopplungselement 33 ist dabei Teil des Black Channels, wohingegen die beiden Datenverarbeitungsvorrichtungen 34, 35 kein Teil des Black Channels mehr sind. Es kann in den beiden Datenverarbeitungsvorrichtungen 34, 35 also ein Verarbeiten der sicherheitsrelevanten Daten bzw. Nachrichten erfolgen.

In einem dritten Schritt S3 des Verfahrens erfolgt mittels der ersten als auch der zweiten Datenverarbeitungsvorrichtung 34, 35 jeweils ein Umwandeln der in dem ersten Sicherheitsprotokoll von dem Kopplungselement 33 empfangenen Nachricht in eine dazu korrespondierende Nachricht 411, 421 in dem zweiten Sicherheitsprotokoll (d.h. ein Umwandeln in eine Nachricht, die dem gemäß dem zweiten Sicherheitsprotokoll vorgebenen Aufbau entspricht). Dies erfolgt unter Bildung einer ersten Checksumme bzw. Prüfsumme 412 in der ersten Datenverarbeitungsvorrichtung 34 und unter Bildung einer zweiten Checksumme 422 in der zweiten Datenverarbeitungsvorrichtung 35, welche jeweils über die erste bzw. zweite Nachricht 411, 421 in dem zweiten Sicherheitsprotokoll gebildet wird.

In einem vierten Schritt S4 des Verfahrens wird die von der ersten Datenverarbeitungsvorrichtung 34 erzeugte Nachricht 411 als erste Nachricht in dem zweiten Sicherheitsprotokoll in dem ersten Speicher 341 abgespeichert. Der erste Speicher kann hierzu einen gesonderten Speicherbereich aufweisen. In dem vierten Schritt S4 des Verfahrens wird ferner die von der zweiten Datenverarbeitungsvorrichtung 35 erzeugte Nachricht 421 als zweite Nachricht in dem zweiten Sicherheitsprotokoll in dem zweiten Speicher 351 abgespeichert. Der zweite Speicher 351 kann hierzu einen gesonderten Speicherbereich aufweisen. Beide Nachrichten 411, 421 werden mit ihrer zugehörigen Checksumme 412, 422 abgespeichert, d. h. die erste Nachricht 411 in dem zweiten Sicherheitsprotokoll mit der ersten Checksumme 412 und die zweite Nachricht 421 in dem zweiten Sicherheitsprotokoll mit der zweiten Checksumme 422.

Die sicherheitsrelevante Nachricht in dem ersten Sicherheitsprotokoll wird also redundant umgewandelt, mit einer Checksumme 412, 422 abgesichert und abgespeichert.

In einem fünften Schritt S5 des Verfahrens wird ein Vergleich der beiden Nachrichten 411, 421, also der ersten Nachricht 411 in dem zweiten Sicherheitsprotokoll und bzw. mit der zweiten Nachricht 421 in dem zweiten Sicherheitsprotokoll, und/oder deren zugehöriger Checksummen 412, 422 vorgenommen. Der Vergleich kann von einer oder von beiden Datenverarbeitungsvorrichtungen 34, 35 ausgeführt werden. Wird bei dem Vergleich festgestellt, dass die beiden Nachrichten 411, 421 und/oder deren Checksummen 412, 422 identisch sind, so fährt das Verfahren mit einem sechsten Schritt S6 fort. Andernfalls kann optional ein weiterer Versuch der Umwandlung der Nachricht von dem ersten in das zweite Sicherheitsprotokoll vorgenommen werden, es kann (insbesondere bei geringfügigen Unterschieden) versucht werden, eine der beiden Nachrichten zu korrigieren, und/oder das Verfahren kann abgebrochen werden.

In einem sechsten Schritt S6 des Verfahrens wird die erste Nachricht 411 in dem zweiten Sicherheitsprotokoll, die in dem ersten Speicher 341 abgespeichert ist, und die zweite Nachricht 421 in dem zweiten Sicherheitsprotokoll, die in dem zweiten Speicher 351 abgespeichert ist, jeweils zusammen mit deren Checksumme 412, 422 von der ersten und/oder der zweiten Datenverarbeitungsvorrichtung 34, 35 zu einer Nachricht 4 zusammengefasst und von dem Kopplungselement bzw. Koppler 33 ausgelesen.

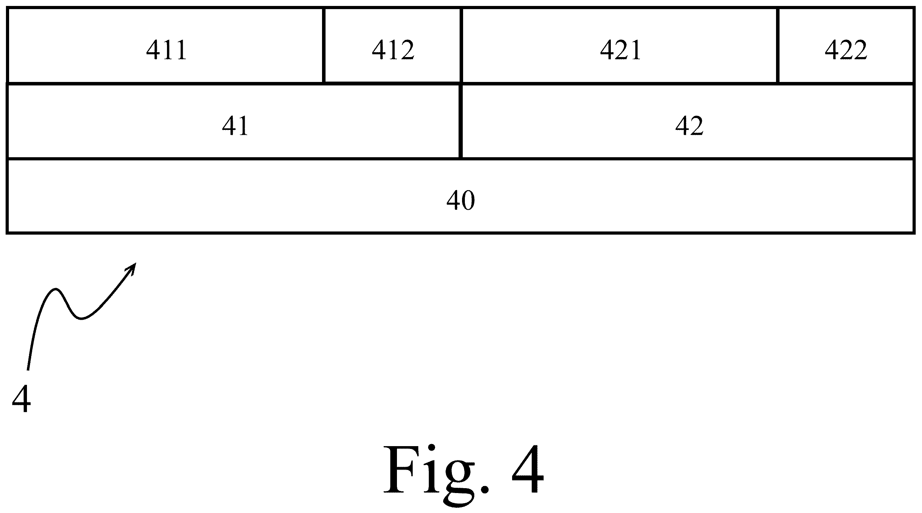

Ein Aufbau einer solchen Nachricht 4 ist in Figur 4 dargestellt. Die Nachricht 4 in dem zweiten Sicherprotokoll umfasst zwei Subframes 41, 42 die gemeinsam einen Safety Frame 40 bilden, wobei einer der beiden Subframes 41 die erste Nachricht 411 in dem zweiten Sicherheitsprotokoll zusammen mit der ersten Checksumme 412 aus dem ersten Speicher 341 und der andere der beiden Subframes 42 die zweite Nachricht 421 in dem zweiten Sicherheitsprotokoll zusammen mit der zweiten Checksumme 422 aus dem zweiten Speicher 342 umfasst.

Alternativ kann auch ausschließlich die erste oder die zweite Nachricht 411, 421 zusammen mit deren jeweiliger Checksumme 412, 422 genutzt werden, um die Nachricht 4 zu bilden. Dazu kann die jeweilige Nachricht 411, 421 zusammen mit deren Checksumme 412, 422 zweimal in der Nachricht 4 vorgeshen werden. Die erste bzw. die zweite Nachricht 411, 421 bildet dann zusammen mit deren jeweiliger Checksumme 412, 422 den jeweiligen Subframe 41, 42 des Safety Frames 40 der Nachricht 4.

Die in dem sechsten Schritt S6 erhaltene Nachricht 4 wird in einem siebten Schritt S7 des Verfahrens von dem Koppler 33 über den zweiten Port 32 an das zweite Feldbusnetzwerk 2, genauer gesagt dessen Feldbus 27, ausgegeben.

Damit wird es möglich, in dem oben beschriebenen Fall sicherheitsrelevanten Daten von dem ersten Feldbusnetzwerk 1 in das zweite Feldbusnetzwerk 2 zu übermitteln.

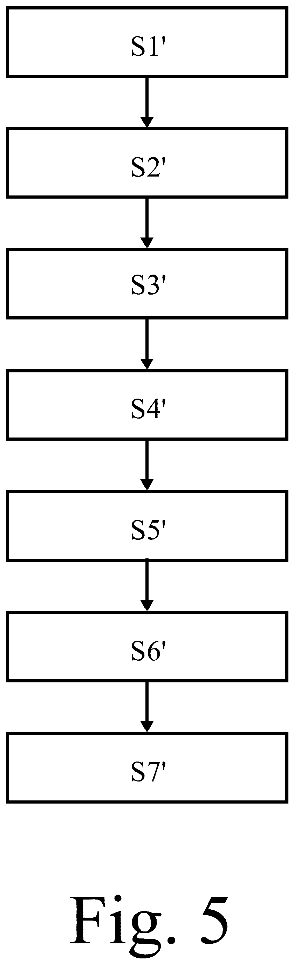

In dem oben beschriebenen Anwendungsfall wird eine sicherhetsrelevante Nachricht, die in dem ersten Sicherheitsprotokoll vorliegt, in eine Nachricht, die in dem zweiten Sicherhietsprotokoll vorliegt, umgewandelt. Das oben beschriebene gilt analog für den Fall, in dem eine sicherhetsrelevante Nachricht, die in dem zweiten Sicherheitsprotokoll vorliegt, in eine Nachricht, die in dem ersten Sicherhietsprotokoll vorliegt, umgewandelt wird. Dies wird nachfolgend im Detail mit Bezug zu figur 5 und mit Bezug zu Figuren 1 bis 4 beschrieben, wobei lediglich die Unterschiede zum obigen Fall aufgezeigt werden. Figur 5 stellt ein Ablaufdiagramm des Verfahrens für den Fall dar, in dem die Nachricht von dem zweiten Sicherheitsprotokoll in das erste Sicherheitsprotokoll gewandelt wird, wobei die zu den oben beschriebenen Schritten korsepondierenden Schritte des Verfahrens und Nachrichten mit demselben Bezugszeichen und dem Zusatz "'" gekennzeichnet sind.

In einem ersten Schritt S1' des Verfahrens wird von dem Kopplungselement 33 eine in dem zweiten Sicherheitsprotokoll über den zweiten Port 32 von dem zweiten Feldbusnetzwerk 2 empfangene Nachricht 4 erkannt (analog zum oben beschriebenen ersten Schritt S1).

In einem zweiten Schritt S2' des Verfahrens wird die in dem ersten Schritt S1' erkannte Nachricht 4 von dem Kopplungselement 33 sowohl an die erste als auch an die zweite Datenverarbeitungsvorrichtung 34, 35 ausgegeben (analog zum oben beschriebenen zweiten Schritt S2).

In einem dritten Schritt S3' des Verfahrens erfolgt (analog zum oben beschriebenen dritten Schritt S3) mittels der ersten als auch der zweiten Datenverarbeitungsvorrichtung 34, 35 jeweils ein Umwandeln der in dem zweiten Sicherheitsprotokoll von dem Kopplungselement 33 empfangenen Nachricht 4 in eine dazu korrespondierende Nachricht 411', 421' in dem ersten Sicherheitsprotokoll (d.h. ein Umwandeln in eine Nachricht, die dem gemäß dem ersten Sicherheitsprotokoll vorgebenen Aufbau entspricht). Dies erfolgt unter Bildung einer ersten Checksumme bzw. Prüfsumme 412' in der ersten Datenverarbeitungsvorrichtung 34 und unter Bildung einer zweiten Checksumme 422' in der zweiten Datenverarbeitungsvorrichtung 35, welche jeweils über die erste bzw. zweite Nachricht 411', 421' in dem zweiten Sicherheitsprotokoll gebildet wird.

In einem vierten Schritt S4' des Verfahrens (der analog zum oben beschriebenen vierten Schritt S4 des Verfahrens ist) wird die von der ersten Datenverarbeitungsvorrichtung 34 erzeugte Nachricht 411' als erste Nachricht in dem ersten Sicherheitsprotokoll in dem ersten Speicher 341 abgespeichert. Der erste Speicher 341 kann hierzu einen gesonderten Speicherbereich aufweisen. In dem vierten Schritt S4' des Verfahrens wird ferner die von der zweiten Datenverarbeitungsvorrichtung 35 erzeugte Nachricht 421' als zweite Nachricht in dem zweiten Sicherheitsprotokoll in dem zweiten Speicher 351 abgespeichert. Der zweite Speicher 351 kann hierzu einen gesonderten Speicherbereich aufweisen. Beide Nachrichten 411', 421' werden mit ihrer zugehörigen Checksumme 412', 422' abgespeichert, d. h. die erste Nachricht 411' in dem ersten Sicherheitsprotokoll mit der ersten Checksumme 412' und die zweite Nachricht 421' in dem ersten Sicherheitsprotokoll mit der zweiten Checksumme 422'.

Die sicherheitsrelevante Nachricht 4 in dem zweiten Sicherheitsprotokoll wird also redundant umgewandelt, mit einer Checksumme 412', 422' abgesichert und abgespeichert.

In einem fünften Schritt S5' des Verfahrens (der analog zum oben beschriebenen fünften Schritt S5 des Verfahrens ist) wird ein Vergleich der beiden Nachrichten 411, 421, also der ersten Nachricht 411' in dem ersten Sicherheitsprotokoll und bzw. mit der zweiten Nachricht 421' in dem ersten Sicherheitsprotokoll, und/oder deren zugehöriger Checksummen 412', 422' vorgenommen. Der Vergleich kann von einer oder von beiden Datenverarbeitungsvorrichtungen 34, 35 ausgeführt werden. Wird bei dem Vergleich festgestellt, dass die beiden Nachrichten 411', 421' und/oder deren Checksummen 412', 422' identisch sind, so fährt das Verfahren mit einem sechsten Schritt S6' fort. Andernfalls kann optional ein weiterer Versuch der Umwandlung der Nachricht von dem ersten in das zweite Sicherheitsprotokoll vorgenommen werden, es kann (insbesondere bei geringfügigen Unterschieden) versucht werden, eine der beiden Nachrichten zu korrigieren, und/oder das Verfahren kann abgebrochen werden.

In einem sechsten Schritt S6' des Verfahrens wird die erste Nachricht 411' in dem ersten Sicherheitsprotokoll, die in dem ersten Speicher 341 abgespeichert ist, oder die zweite Nachricht 421' in dem ersten Sicherheitsprotokoll, die in dem zweiten Speicher 351 abgespeichert ist, jeweils zusammen mit deren Checksumme 412', 422' von dem Kopplungselement bzw. Koppler 33 ausgelesen. Ein Aufbau einer solchen Nachricht gemäß bzw. in dem ersten Sicherheitsprotokoll entspricht einem der Subframes 41, 42 der in Figur 4 dargestellten Nachricht 4.

Die in dem sechsten Schritt S6' erhaltene Nachricht, die in dem ersten Sicherheitsprotokoll vorliegt, wird in einem siebten Schritt S7' des Verfahrens von dem Koppler 33 über den ersten Port 31 an das erste Feldbusnetzwerk 1, genauer gesagt dessen Feldbus 16, ausgegeben.

Damit wird es möglich, in dem oben beschriebenen Fall sicherheitsrelevanten Daten von dem zweiten Feldbusnetzwerk 2 in das erste Feldbusnetzwerk 1 zu übermitteln.

Nachfolgend wird eine zusätzliche oder alternative Ausgestaltung des Netzwerks 100 und insbesondere des Brücken-Feldbusmoduls 3 im Detail beschrieben.

In dieser Ausgestaltung weist das Netzwerk 100 einen fünften Nothalt-Schalter 5 und ein zweites Relay 6 auf. Der fünfte Nothalt-Schalter 5 ist mit einem sicheren Eingang 36 des Brückenfeldbus-Modul 3 verbunden, wobei der sichere Eingang 36 wiederum zwei Anschlüsse 361, 362 aufweist, sodass eine redundante Verkabelung vorgesehen ist. Das zweite Relay 6 ist mit einem sicheren Ausgang des Feldbusbrücken-Moduls 37 verbunden, wobei der sichere Ausgang 37 wiederum zwei Anschlüsse 371, 372 aufweist, sodass eine redundante Verkabelung vorgesehen ist. Es wird daher jede Nachricht, umfassend sicherheitsrelevante Daten, vom fünften Notausschalter 25 an beiden Anschlüssen 361, 362 des sicheren Eingangs 36 empfangen und jede Nachricht, umfassend sicherheitsrelevante Daten, wird über beide Anschlüsse 371, 372 des sicheren Ausgangs 37 ausgegeben. Die Beschreibung des sicheren Eingangs und Ausgangs des Brücken-Feldbusmoduls 3 gilt analog auch für die oben erwähnten sicherhen Ein- und Ausgängen der Feldbusmodule 11, 12, 21, 22 des ersten und des zweiten Feldbusnetzwerks 1, 2.

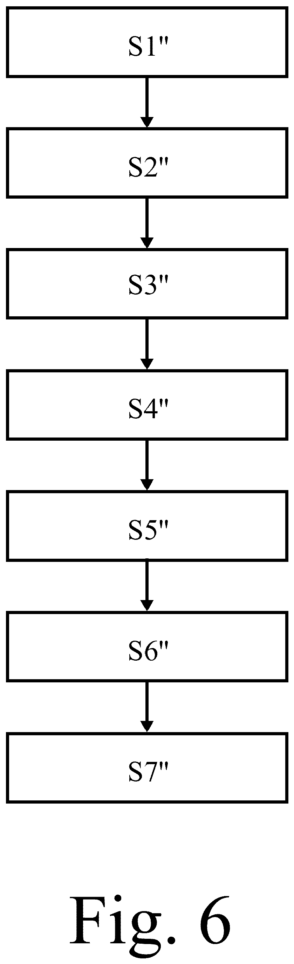

Der fünfte Nothalt-Schalter 5 und das zweite Relay 6 nutzen zur Kommunikation mit dem Brücken-Feldbusmodul 3 kein Sicherheitsprotokoll. Die Daten werden als (einfaches oder redundantes) digitales Signal (insbesondere ohne Nutzung eines Sicherheitsprotokolls) vom fünften Nothalt-Schalter 5 an das Brückenfeldbusmodul kommuniziert und von diesem als (einfaches) digitales Signal an das zweite Relay ausgegeben.. Es ist jedoch denkbar, dass bei Betätigung des fünften Nothalt-Schalters 5 der Aktor 26 des zweiten Feldbusnetzwerks 2 gestoppt werden muss. Daher müssen die sicherheitsrelevanten Daten, die von dem fünften Nothalter-Schalter 5 in dem ersten Brückenmodul 3 empfangen werden, auch dem zweiten Feldbusnetzwerk in dem zweiten Sicherheitsprotokoll zur Verfügung gestellt werden. Gleiches gilt für das erste sicherheitsprotokoll, wenn beispielsweise sicherheitsrelevante Daten von dem sünsten Notaus-Schalter 5 an das erste Fledbusmodul 11 des ersten Feldbusnetzwerks 1 kommuniziert werden sollen. Es wird deswegen auch hier im Wesentlichen das oben beschrieben Verfahren mit einer Abwandlung in dem ersten Schritt S1 bzw. S1' und dem zweiten Schritt S2 bzw. S2', wie nachfolgend im Detail beschrieben, angewandt. Ein Ablaufdiagramm dieses abgewandelten Verfahrens ist in Figur 6 dargestellt. Die zu den oben beschriebenen Schritten korsepondierenden Schritte des Verfahrens sind mit demselben Bezugszeichen und dem Zusatz """ gekennzeichnet.

In einem ersten Schritt S1" des abgewandelten Verfahrens wird an beiden Anschlüssen 361, 362 des sicheren Eingangs 36 ein und dieselbe Nachricht von dem fünften Nothalt-Schalter 5 empfangen.

In einem zweiten Schritt S2" des abgewandelten Verfahrens wird die in dem ersten Schritt S1" des abgewandelten Verfahrens empfangene Nachricht von dem ersten Anschluss 361 des sicheren Eingangs 36 an die erste Datenverarbeitungsvorrichtung 34 des Brücken-Feldbusmoduls 3 ausgegeben und die in dem ersten Schritt S1" des abgewandelten Verfahrens empfangene Nachricht von dem zweiten Anschluss 362 des sicheren Eingangs 36 an die zweite Datenverarbeitungsvorrichtung 35 des Brücken-Feldbusmoduls 3 ausgegeben.

In einem dritten Schritt S3" des abgewandelten Verfahrens erfolgt mittels der ersten als auch der zweiten Datenverarbeitungsvorrichtung 34, 35 jeweils ein Umwandeln der in dem ersten Sicherheitsprotokoll von dem ersten bzw. dem zweiten Anschluss 361, 362 empfangenen Nachricht in eine dazu korrespondierende Nachricht 411, 421 in dem zweiten (und/oder dem ersten) Sicherheitsprotokoll. Dies erfolgt unter Bildung einer ersten Checksumme 412 (bzw. 412') in der ersten Datenverarbeitungsvorrichtung 34 und unter Bildung einer zweiten Checksumme 422 (bzw. 422') in der zweiten Datenverarbeitungsvorrichtung 35, welche jeweils über die erste bzw. zweite Nachricht 411, 421 (bzw. 411', 412') in dem zweiten (oder dem ersten) Sicherheitsprotokoll gebildet wird. Der dritte Schritt S3" des abgewandelten Verfahren entspricht dem dritten Schritt S3 des oben mit Bezug zu Figur 3 beschriebenen Verfahrens (bzw. dem dritten Schritt S3' des oben mit Bezug zu Figur 5 beschriebenen Verfahrens).

In einem vierten Schritt S4" des abgewandelten Verfahrens wird die von der ersten Datenverarbeitungsvorrichtung 34 erzeugte Nachricht 411 (bzw. 411') als erste Nachricht in dem zweiten (bzw. ersten) Sicherheitsprotokoll in dem ersten Speicher 341 abgespeichert. Der erste Speicher 341 kann hierzu einen gesonderten Speicherbereich aufweisen. In dem vierten Schritt S4" des abgewandelten Verfahrens wird ferner die von der zweiten Datenverarbeitungsvorrichtung 35 erzeugte Nachricht 421 (bzw. 421') als zweite Nachricht in dem zweiten (bzw. ersten) Sicherheitsprotokoll in dem zweiten Speicher 351 abgespeichert. Der zweite Speicher 351 kann hierzu einen gesonderten Speicherbereich aufweisen. Beide Nachrichten 411, 421 (bzw. 411', 421') werden mit ihrer zugehörigen Checksumme 412, 422 (bzw. 412', 422') abgespeichert, d. h. die erste Nachricht 411 in dem zweiten (bzw. ersten) Sicherheitsprotokoll mit der ersten Checksumme 412 (bzw. 412') und die zweite Nachricht 421 (bzw. 421') in dem zweiten (bzw. ersten) Sicherheitsprotokoll mit der zweiten Checksumme 422 (bzw. 422').

Die über den sicheren Eingang 36 empfangene Nachricht wird also redundant in das zweite (oder das erste) Sicherheitsprotokoll umgewandelt, mit einer Checksumme 412, 422 (bzw. 412', 422') abgesichert und abgespeichert. Der vierte Schritt S4' des abgewandelten Verfahrens entspricht dem vierten Schritt S4 des oben mit Bezug zu Figur 3 beschriebenen Verfahrens (bzw. dem vierten Schritt S4' des oben mit Bezug zu Figur 5 beschriebenen Verfahrens).

In einem sechsten Schritt S6'des abgewandelten Verfahrens wird die erste Nachricht 411 in dem zweiten Sicherheitsprotokoll, die in dem ersten Speicher 341 abgespeichert ist, und die zweite Nachricht 421 in dem zweiten Sicherheitsprotokoll, die in dem zweiten Speicher 351 abgespeichert ist, jeweils zusammen mit deren Checksumme 412, 422 zu einer Nachricht 4 zusammengefasst und von dem Koppler 33 ausgelesen .

Ein Aufbau einer solchen Nachricht 4 ist in Figur 4 dargestellt. Die Nachricht 4 in dem zweiten Sicherprotokoll umfasst zwei Subframes 41, 42 die gemeinsam einen Safety Frame 40 bilden, wobei einer der beiden Subframes 41 die erste Nachricht 411 in dem zweiten Sicherheitsprotokoll zusammen mit der ersten Checksumme 412 aus dem ersten Speicher 341 und der andere der beiden Subframes 42 die zweite Nachricht 421 in dem zweiten Sicherheitsprotokoll zusammen mit der zweiten Checksumme 422 aus dem zweiten Speicher 342 umfasst.

Wenn die Umwandlung in die Nachricht in dem ersten Sicherheitprotokoll erfolgt, wird die erste Nachricht 411' in dem ersten Sicherheitsprotokoll, die in dem ersten Speicher 341 abgespeichert ist, oder die zweite Nachricht 421' in dem ersten Sicherheitsprotokoll, die in dem zweiten Speicher 351 abgespeichert ist, jeweils zusammen mit deren Checksumme 412', 422' von dem Kopplungselement bzw. Koppler 33 ausgelesen. Ein Aufbau einer solchen Nachricht gemäß bzw. in dem ersten Sicherheitsprotokoll entspricht einem der Subframes 41, 42 der in Figur 4 dargestellten Nachricht 4.

Der sechste Schritt S6' des abgewandelten Verfahrens entspricht dem sechsten Schritt S6 des oben mit Bezug zu Figur 3 beschriebenen Verfahrens (bzw. dem sechsten Schritt S6' des oben mit Bezug zu Figur 5 beschriebenen Verfahrens).

Die in dem sechsten Schritt S6" des abgewandelten Verfahrens erhaltene Nachricht 4 wird in einem siebten Schritt S7' des abgewandelten Verfahrens von dem Koppler 33 über den zweiten Port 32 an das zweite (bzw. erste) Feldbusnetzwerk 2 (bzw. 1), genauer gesagt dessen Feldbus 27 (bzw. 16), ausgegeben. Der siebte Schritt S7" des abgewandelten Verfahrens entspricht dem siebten Schritt S7 des oben mit Bezug zu Figur 3 beschriebenen Verfahrens (bzw. dem siebten Schritt S7' des oben mit Bezug zu Figur 5 beschriebenen Verfahrens)..

### Bezugszeichenliste

- 1: erstes Feldbusnetzwerk
- 11: erstes Feldbusmodul
- 12: zweites Feldbusmodul
- 13: erster Nothalt- bzw. Notaus-Schalter
- 14: erstes Relay
- 15: Lichtschranke
- 16: Feldbus
- 2: zweites Feldbusnetzwerk
- 21: erstes Feldbusmodul
- 22: zweites Feldbusmodul
- 23: zweiter Nothalt- bzw. Notaus-Schalter
- 24: dritter Nothalt- bzw. Notaus-Schalter
- 25: vierter Nothalt- bzw. Notaus-Schalter
- 26: Aktor
- 27: Feldbus
- 3: Brücken-Feldbusmodul
- 31: erster Port
- 32: zweiter Port
- 33: Kopplungs-Element
- 34: erste Datenverarbeitungsvorrichtung
- 341: erster sicherer Speicher
- 35: zweite Datenverarbeitungsvorrichtung
- 351: zweiter sicherer Speicher
- 36: sicherer Eingang
- 361: erster Anschluss
- 362: zweiter Anschluss
- 37: sicherer Ausgang
- 371: erster Anschluss
- 371: zweiter Anschluss
- 4: Nachricht gemäß zweitem Sicherheitsprotokoll
- 40: Frame
- 41: erster Subframe
- 411: erste Nachricht gemäß zweitem Sicherheitsprotokoll
- 412: erste Prüfsumme
- 42: zweiter Subframe
- 421: zweite Nachricht gemäß zweitem Sicherheitsprotokoll
- 422: zweite Prüfsumme
- 411': erste Nachricht gemäß erstem Sicherheitsprotokoll
- 412': erste Prüfsumme
- 421': zweite Nachricht gemäß erstem Sicherheitsprotokoll
- 422': zweite Prüfsumme
- 5: vierter Nothalt- bzw. Notaus-Schalter
- 6: zweites Relay
- 100: Netzwerk

- S1-S7, S1' - S7', S1"-S7": Schritte des (abgewandelten) Verfahrens

## Patentansprüche

1. Brücken-Feldbusmodul (3), das zur Verbindung zweier Feldbusnetzwerke (1, 2) miteinander ausgestaltet ist, wobei:
- ein erstes Feldbusnetzwerk (1) der zwei Feldbusnetzwerke (1, 2) für sicherheitsrelevante Nachrichten ein erstes Sicherheitsprotokoll sowie das Black Channel Prinzip nutzt, und
- ein zweites Feldbusnetzwerk (2) der zwei Feldbusnetzwerke (1, 2) für die sicherheitsrelevanten Nachrichten ein zweites, vom ersten Sicherheitsprotokoll abweichendes Sicherheitsprotokoll sowie das Black Channel Prinzip nutzt,
- wobei das Brücken-Feldbusmodul (3) umfasst:
- ein Kopplungselement (33), das ausgestaltet ist, um eine von dem ersten Feldbusnetzwerk (1) an dem Feldbus-Brückenmodul (3) empfangene sicherheitsrelevante Nachricht zu erkennen,
- wobei das Brücken-Feldbusmodul (3) ausgestaltet ist, um:
- die sicherheitsrelevante Nachricht von dem ersten Feldbusnetzwerk (1) zu empfangen, die dem ersten Sicherheitsprotokoll entspricht,
**dadurch gekennzeichnet, dass** das Brücken-Feldbusmodul (3) ausgestaltet ist, um:
- die von dem ersten Feldbusnetzwerk (1) empfangene, erkannte sicherheitsrelevante Nachricht in eine erste und eine zweite sicherheitsrelevante Nachricht (411, 421, 411', 421') umzuwandeln, die jeweils dem zweiten Sicherheitsprotokoll entsprechen,
- die erste und die zweite sicherheitsrelevante Nachricht (411, 421, 411', 421') miteinander zu vergleichen, und
- die erste und/oder die zweite sicherheitsrelevante Nachricht (411, 421, 411', 421') in Abhängigkeit eines Ergebnisses des Vergleichens an das zweite Feldbusnetzwerk (2) auszugeben.

2. Brücken-Feldbusmodul (3) nach Anspruch 1, **dadurch gekennzeichnet, dass:**
- das Umwandeln der von dem ersten Feldbusnetzwerk (1) empfangenen sicherheitsrelevanten Nachricht in die erste sicherheitsrelevante Nachricht (411) ein Bilden einer ersten Prüfsumme (412) für die erste sicherheitsrelevante Nachricht umfasst,
- das Umwandeln der von dem ersten Feldbusnnetzwerk (1) empfangenen sicherheitsrelevanten Nachricht in die zweite sicherheitsrelevante Nachricht (412) ein Bilden einer zweiten Prüfsumme (412) für die zweite sicherheitsrelevante Nachricht umfasst, und
- die erste sicherheitsrelevante Nachricht (411, 411') zusammen mit der ersten Prüfsumme (412, 412')in Abhängigkeit des Ergebnisses des Vergleichens an das zweite Feldbusnetzwerk (2) ausgegeben werden, und, optional,
- zusätzlich die zweite sicherheitsrelevante Nachricht (421) zusammen mit der zweiten Prüfsumme (422) in Abhängigkeit des Ergebnisses des Vergleichens an das zweite Feldbusnetzwerk (2) ausgegeben werden.

3. Brücken-Feldbusmodul (3) nach Anspruch 1 oder 2, **dadurch gekennzeichnet, dass** das Brücken-Feldbusmodul (3) eine erste Datenverarbeitungsvorrichtung (34) umfasst, die zur Umwandlung der von dem ersten Feldbusnetzwerk (1) empfangenen sicherheitsrelevanten Nachricht in die erste sicherheitsrelevante Nachricht (411, 411'), und, soweit auf Anspruch 2 rückbezogen, zum Bilden der ersten Prüfsumme (412, 412'), ausgestaltet ist.

4. Brücken-Feldbusmodul (3) nach Anspruch 3, **dadurch gekennzeichnet, dass** das Kopplungselement (33) ausgestaltet ist, um die erkannte sicherheitsrelevante Nachricht an die erste Datenverarbeitungsvorrichtung (34) auszugeben.

5. Brücken-Feldbusmodul (3) nach Anspruch 3 oder 4, **dadurch gekennzeichnet, dass** die erste Datenverarbeitungsvorrichtung (34) einen ersten sicheren Speicher (341) umfasst, der ausgestaltet ist, um die erste Nachricht (411, 411'), und, soweit auf Anspruch 2 rückbezogen, die erste Prüfsumme (412, 412'), zwischenzuspeichern.

6. Brücken-Feldbusmodul (3) nach einem der Ansprüche 1 bis 5, **dadurch gekennzeichnet, dass** das Brücken-Feldbusmodul (3) eine zweite Datenverarbeitungsvorrichtung (35) umfasst, die zur Umwandlung der von dem ersten Feldbusnetzwerk (1) empfangenen sicherheitsrelevanten Nachricht in die zweite sicherheitsrelevante Nachricht (421, 421') und, soweit auf Anspruch 2 rückbezogen, zum Bilden der zweiten Prüfsumme (422, 422'), ausgestaltet ist.

7. Brücken-Feldbusmodul (3) nach Anspruch 6, **dadurch gekennzeichnet, dass** das Kopplungselement (33) ausgestaltet ist, um die erkannte sicherheitsrelevante Nachricht an die zweite Datenverarbeitungsvorrichtung (35) auszugeben.

8. Brücken-Feldbusmodul (3) nach Anspruch 6 oder 7, **dadurch gekennzeichnet, dass** die zweite Datenverarbeitungsvorrichtung (35) einen zweiten sicheren Speicher (351) umfasst, der ausgestaltet ist, um die zweite Nachricht (421, 421'), und, soweit auf Anspruch 2 rückbezogen, die zweite Prüfsumme (422, 422') zwischenzuspeichern.

9. Verfahren zum Betreiben eines Brücken-Feldbusmoduls (3), das zur Verbindung zweier Feldbusnetzwerke (1, 2) miteinander ausgestaltet ist, wobei:
- ein erstes Feldbusnetzwerk (1) der zwei Feldbusnetzwerke (1, 2) für sicherheitsrelevante Nachrichten ein erstes Sicherheitsprotokoll sowie das Black Channel Prinzip nutzt, und
- ein zweites Feldbusnetzwerk (2) der zwei Feldbusnetzwerke (1, 2) für die sicherheitsrelevanten Nachrichten ein zweites, vom ersten Sicherheitsprotokoll abweichendes Sicherheitsprotokoll sowie das Black Channel Prinzip nutzt,
- wobei das Verfahren umfasst:
- Empfangen einer sicherheitsrelevanten Nachricht von dem ersten Feldbusnetzwerk (1), die dem ersten Sicherheitsprotokoll entspricht, an dem Brücken-Feldbusmoduls (3),
- Erkennen der an dem Feldbus-Brückenmodul (3) von dem ersten Feldbusnetzwerk (1) empfangenen sicherheitsrelevante Nachricht mittels eines Kopplungselements (33),
**dadurch gekennzeichnet, dass** das Verfahren umfasst:
- Umwandeln der erkannten, von dem ersten Feldbusnetzwerk (1) empfangenen sicherheitsrelevanten Nachricht in eine erste und eine zweite sicherheitsrelevante Nachricht (411, 421, 411', 421'), die jeweils dem zweiten Sicherheitsprotokoll entsprechen,
- Vergleichen der ersten und der zweiten sicherheitsrelevanten Nachricht (411, 421, 411', 421') miteinander, und
- Ausgeben der ersten und/oder der zweiten sicherheitsrelevanten Nachricht (411, 421, 411', 421') in Abhängigkeit eines Ergebnisses des Vergleichens an das zweite Feldbusnetzwerk (2).

10. Computerprogramm und/oder computer-lesbares Medium, umfassend Befehle, die bei der Ausführung des Programms bzw. der Befehle durch ein Brücken-Feldbusmodul (3), das zur Verbindung zweier Feldbusnetzwerke (1, 2) miteinander ausgestaltet ist und ein Kopplungselement (33) aufweist, dieses veranlassen, das Verfahren nach Anspruch 9 auszuführen.

## Claims

1. Bridging field bus module (3), which is designed for connecting two field bus networks (1, 2) to each other, wherein:
- a first field bus network (1) of the two field bus networks (1, 2) uses a first safety protocol and the black channel principle for safety-relevant messages, and
- a second field bus network (2) of the two field bus networks (1, 2) uses a second safety protocol, different from the first safety protocol, and the black channel principle for the safety-relevant messages,
- wherein the bridging field bus module (3) comprises:
- a coupling element (33), which is designed to detect a safety-relevant message received from the first field bus network (1) on the field bus bridging module (3),
- wherein the bridging field bus module (3) is designed to:
- receive the safety-relevant message corresponding to the first safety protocol from the first field bus network (1),
**characterized in that** the bridging field bus module (3) is designed to:
- convert the detected safety-relevant message received from the first field bus network (1) into a first and a second safety-relevant message (411, 421, 411', 421'), each corresponding to the second safety protocol,
- compare the first and second safety-relevant messages (411, 421, 411', 421') with each other, and
- output the first and/or second safety-relevant message (411, 421, 411', 421') to the second field bus network (2) depending on a result of the comparison.

2. Bridging field bus module (3) according to Claim 1, **characterized in that**:
- the conversion of the safety-relevant message received from the first field bus network (1) into the first safety-relevant message (411) comprises forming a first checksum (412) for the first safety-relevant message,
- the conversion of the safety-relevant message received from the first field bus network (1) into the second safety-relevant message (412) comprises forming a second checksum (412) for the second safety-relevant message, and
- the first safety-relevant message (411, 411') together with the first checksum (412, 412') are output to the second field bus network (2) depending on the result of the comparison, and, optionally,
- in addition the second safety-relevant message (421) together with the second checksum (422) are output to the second field bus network (2) depending on the result of the comparison.

3. Bridging field bus module (3) according to Claim 1 or 2, **characterized in that** the bridging field bus module (3) comprises a first data processing device (34), which is designed to convert the safety-relevant message received from the first field bus network (1) into the first safety-relevant message (411, 411'), and, if referred back to Claim 2, to form the first checksum (412, 412').

4. Bridging field bus module (3) according to Claim 3, **characterized in that** the coupling element (33) is designed to output the detected safety-relevant message to the first data processing device (34).

5. Bridging field bus module (3) according to Claim 3 or 4, **characterized in that** the first data processing device (34) comprises a first safe memory (341), which is designed to buffer the first message (411, 411'), and, if referred back to Claim 2, the first checksum (412, 412').

6. Bridging field bus module (3) according to any one of Claims 1 to 5, **characterized in that** the bridging field bus module (3) comprises a second data processing device (35), which is designed to convert the safety-relevant message received from the first field bus network (1) into the second safety-relevant message (421, 421'), and, if referred back to Claim 2, to form the second checksum (422, 422').

7. Bridging field bus module (3) according to Claim 6, **characterized in that** the coupling element (33) is designed to output the detected safety-relevant message to the second data processing device (35).

8. Bridging field bus module (3) according to Claim 6 or 7, **characterized in that** the second data processing device (35) comprises a second safe memory (351), which is designed to buffer the second message (421, 421'), and, if referred back to Claim 2, the second checksum (422, 422').

9. Method for operating a bridging field bus module (3), which is designed to connect two field bus networks (1, 2) to each other, wherein:
- a first field bus network (1) of the two field bus networks (1, 2) uses a first safety protocol and the black channel principle for safety-relevant messages, and
- a second field bus network (2) of the two field bus networks (1, 2) uses a second safety protocol, different from the first safety protocol, and the black channel principle for the safety-relevant messages,
- the method comprising:
- receiving a safety-relevant message, which corresponds to the first safety protocol, from the first field bus network (1) on the bridging field bus module (3),
- detecting the safety-relevant message received from the first field bus network (1) on the field bus bridging module (3) by means of a coupling element (33), **characterized in that** the method comprises:
- converting the detected safety-relevant message received from the first field bus network (1) into a first and a second safety-relevant message (411, 421, 411', 421'), each corresponding to the second safety protocol,
- comparing the first and second safety-relevant messages (411, 421, 411', 421') with each other, and
- outputting the first and/or second safety-relevant message (411, 421, 411', 421') to the second field bus network (2) depending on a result of the comparison.

10. Computer program and/or computer-readable medium comprising commands which, when the program or commands are executed by a bridging field bus module (3), which is designed to connect two field bus networks (1, 2) to each other and comprises a coupling element (33), cause said module to execute the method according to Claim 9.

## Revendications

1. Module passerelle de bus de terrain (3), qui est configuré pour raccorder deux réseaux de bus de terrain (1, 2) l'un à l'autre :
- un premier réseau de bus de terrain (1) des deux réseaux de bus de terrain (1, 2) utilisant un premier protocole de sécurité ainsi que le principe du canal noir pour des messages relatifs à la sécurité, et
- un second réseau de bus de terrain (2) des deux réseaux de bus de terrain (1, 2) utilisant un second protocole de sécurité différent du premier protocole de sécurité ainsi que le principe du canal noir pour des messages relatifs à la sécurité,
- le module passerelle de bus de terrain (3) comprenant :
- un élément de couplage (33), qui est configuré pour identifier un message relatif à la sécurité reçu par le premier réseau de bus de terrain (1) sur le module passerelle de bus de terrain (3),
- le module passerelle de bus de terrain (3) étant configuré pour :
- recevoir le message relatif à la sécurité du premier réseau de bus de terrain (1), qui correspond au premier protocole de sécurité,
**caractérisé en ce que** le module passerelle de bus de terrain (3) est configuré pour :
- convertir le message relatif à la sécurité identifié reçu par le premier réseau de bus de terrain (1) en premier et en un deuxième message relatif à la sécurité (411, 421, 411', 421'), qui correspondent chacun au second protocole de sécurité,
- comparer le premier et le deuxième message relatif à la sécurité (411, 421, 411', 421') l'un à l'autre, et
- envoyer le premier et/ou le deuxième message relatif à la sécurité (411, 421, 411', 421') au second réseau de bus de terrain (2) en fonction d'un résultat de la comparaison.

2. Module passerelle de bus de terrain (3) selon la revendication 1, **caractérisé en ce que** :
- la conversion du message relatif à la sécurité reçu par le premier réseau de bus de terrain (1) en le premier message relatif à la sécurité (411) comprend l'obtention d'une première somme de contrôle (412) pour le premier message relatif à la sécurité,
- la conversion du message relatif à la sécurité reçu par le premier réseau de bus de terrain (1) en le deuxième message relatif à la sécurité (412) comprend l'obtention d'une deuxième somme de contrôle (412) pour le deuxième message relatif à la sécurité, et
- le premier message relatif à la sécurité (411, 411') conjointement avec la première somme de contrôle (412, 412') est envoyé au second réseau de bus de terrain (2) en fonction du résultat de la comparaison, et, en option,
- le deuxième message relatif à la sécurité (421) conjointement avec la deuxième somme de contrôle (422) est envoyé en supplément au second réseau de bus de terrain (2) en fonction du résultat de la comparaison.

3. Module passerelle de bus de terrain (3) selon la revendication 1 ou 2, **caractérisé en ce que** le module passerelle de bus de terrain (3) comprend un premier dispositif de traitement de données (34), qui est configuré pour convertir le message relatif à la sécurité reçu par le premier réseau de bus de terrain (1) en le premier message relatif à la sécurité (411, 411'), et dans la mesure où il est fait référence à la revendication 2, pour obtenir la première somme de contrôle (412, 412').

4. Module passerelle de bus de terrain (3) selon la revendication 3, **caractérisé en ce que** l'élément de couplage (33) est configuré pour envoyer le message relatif à la sécurité identifié au premier dispositif de traitement de données (34).

5. Module passerelle de bus de terrain (3) selon la revendication 3 ou 4, **caractérisé en ce que** le premier dispositif de traitement de données (34) comprend une première mémoire sécurisée (341), qui est configurée pour stocker le premier message (411, 411') et, dans la mesure où il est fait référence à la revendication 2, pour stocker temporairement la première somme de contrôle (412, 412').

6. Module passerelle de bus de terrain (3) selon l'une des revendications 1 à 5, **caractérisé en ce que** le module passerelle de bus de terrain (3) comprend un deuxième dispositif de traitement de données (35), qui est configuré pour convertir le message relatif à la sécurité reçu par le premier réseau de bus de terrain (1) en le deuxième message relatif à la sécurité (421, 421'), et dans la mesure où il est fait référence à la revendication 2, pour obtenir la deuxième somme de contrôle (422, 422').

7. Module passerelle de bus de terrain (3) selon la revendication 6, **caractérisé en ce que** l'élément de couplage (33) est configuré pour envoyer le message relatif à la sécurité identifié au deuxième dispositif de traitement de données (35).

8. Module passerelle de bus de terrain (3) selon la revendication 6 ou 7, **caractérisé en ce que** le deuxième dispositif de traitement de données (35) comprend une deuxième mémoire sécurisée (351), qui est configurée pour stocker le deuxième message (421, 421') et, dans la mesure où il est fait référence à la revendication 2, pour stocker temporairement la deuxième somme de contrôle (422, 422').

9. Procédé destiné à faire fonctionner un module passerelle de bus de terrain (3), qui est configuré pour raccorder deux réseaux de bus de terrain (1, 2) l'un à l'autre :
- un premier réseau de bus de terrain (1) des deux réseaux de bus de terrain (1, 2) utilisant un premier protocole de sécurité ainsi que le principe du canal noir pour des messages relatifs à la sécurité, et
- un second réseau de bus de terrain (2) des deux réseaux de bus de terrain (1, 2) utilisant un second protocole de sécurité différent du premier protocole de sécurité ainsi que le principe du canal noir pour des messages relatifs à la sécurité,
- le procédé comprenant :
- réception d'un message relatif à la sécurité du premier réseau de bus de terrain (1), qui correspond au premier protocole de sécurité, sur le module passerelle de bus de terrain (3),
- identification du message relatif à la sécurité reçu par le premier réseau de bus de terrain (1) sur le module passerelle de bus de terrain (3) au moyen d'un élément de couplage (33),
**caractérisé en ce que** le procédé comprend :
- conversion du message relatif à la sécurité identifié reçu par le premier réseau de bus de terrain (1) en un premier et en un deuxième message relatif à la sécurité (411, 421, 411', 421'), qui correspondent chacun au second protocole de sécurité,
- comparaison du premier et du deuxième message relatif à la sécurité (411, 421, 411', 421') l'un à l'autre, et
- envoi du premier et/ou du deuxième message relatif à la sécurité (411, 421, 411', 421') au second réseau de bus de terrain (2) en fonction du résultat de la comparaison.

10. Programme informatique et/ou support lisible par ordinateur, comprenant des instructions, qui amènent ceux-ci, lors de l'exécution du programme ou des instructions par un module passerelle de bus de terrain (3), qui est configuré pour raccorder deux réseaux de bus de terrain (1, 2) l'un à l'autre et comporte un élément de couplage (33), à exécuter le procédé selon la revendication 9.
